# EUROPEAN PATENT APPLICATION

(11) **EP 0 800 983 A1**
(43) Date of publication of application: **15.10.1997**
(21) Application number: 95941905.2
(22) Date of filing: 26.12.1995
(51) Int. Cl.: B62D 55/30

(54) **CRAWLER TYPE VEHICLE RUNNING DEVICE**

(30) Priority: 27.12.1994 JP 336929/94
(71) Applicant: KOMATSU LTD., Minato-ku Tokyo 107 (JP)
(72) Inventor: KUMAZAWA, Takeshi, Hirakata-shi, Osaka 573 (JP); SOGA, Kazuo, Hirakata-shi, Osaka 573 (JP); OTA, Akio, Hirakata-shi, Osaka 573 (JP); SHINNOU, Tamotsu, Hirakata-shi, Osaka 573 (JP)
(74) Representative: Meissner, Peter E., Dipl.-Ing.
(86) International application number: JP9502705
(87) International publication number: WO9620104

(57) **Abstract**

Even if a crawler belt rides over a rock, the ground contacting length does not have to be reduced, thereby making it possible to improve the stability of a vehicle. Even if either of right- and left-hand crawler belts rides over a rock, an idler and a lower rolling wheel in the vicinity thereof are prevented from falling down, whereby the crawler belt is prevented from being greately twisted and damaged. To make this possible, there is provided a crawler type vehicle running device comprising left- and right-hand track frames supporting a vehicle body, driving wheels each supported on one end of each of the track frames, idler supports each supported on the other end of each of the track frames, piston rods adapted to be biassed by re-coiled springs so as to push out the idler supports, idlers supported by the idler supports, crawler belts passed around the idlers and driving wheels and lower rolling wheels for guiding the crawler belts, wherein the track frames (3, 4) are each formed in an inverted U shape and the idler supports (6, 6) are provided such that they are longitudinally slidably supported between guide members (12a, 12b) fixed inside two leg portions of the inverted U shape track frames. The idler supports (6, 6) have idlers (7, 7) rotatably supported thereon and first lower rolling wheels (10, 10) rotatably supported at positions adjacent to the idlers via brackets (18, 18).

## Description

### Field of the Invention

The present invention relates to a crawler type vehicle running device and, more particularly, to a crawler type vehicle running device wherein an idler and a lower rolling wheel in the vicinity thereof are supported by the same slidable member.

### Related Art

As a prior art for a crawler type vehicle running device, there is a first construction disclosed in PCT-Japanese Unexamined Patent Publication No. 4-502739.

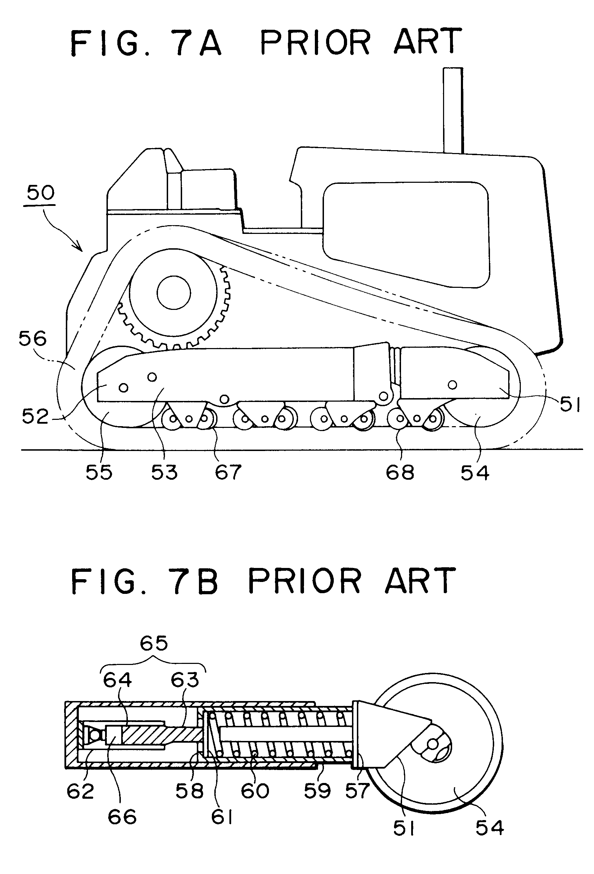

A tension adjusting mechanism of a track 56 of a crawler type vehicle 50 is equipped with: a frame structure 53 which has first and second end sections 51, 52; a first wheel 54 rotatably supported by the first end section 51 of the frame structure 53; a second wheel 55 rotatably supported in the vicinity of the second end section 52 of the frame structure 53; and the track 56 which encircles the first and second wheels 54, 55 as shown in Fig. 7A and Fig. 7B.

The tension adjustment mechanism is further equipped with a pressurized fluid source which is not shown and which supplies a pressurized fluid to: a first cylinder 59 which has first and second end walls 57, 58 and which is connected to the first wheel 54; a spring 60 disposed in the first cylinder 59; a piston 61 which is in contact with the spring 60; a second cylinder 62 which is provided coaxially with the piston 61; a rod member 65 which has a first end section 63 connected to the piston 61 and a second end section 64 disposed in the second cylinder 62; and a hydraulic chamber 66 which is constituted by the rod member 65 and the second cylinder 62.

The ground contacting side of the track 56 is guided by lower rolling wheels 67 rotatably supported by the frame structure 53 and lower rolling wheels 68 rotatably supported by the first end section 51.

In such a construction, when pressurized fluid is supplied to the hydraulic chamber 66 of the second cylinder 62, the piston 61 is pushed out via the rod member 65, and the first wheel 54 is pushed out while compressing the spring 60 so as to tension the track 56. In this way, the pressurized fluid is supplied to the hydraulic chamber 66 of the second cylinder 62 until the tension of the track 56 reaches a predetermined value.

While the crawler type vehicle 50 is traveling, if the track 56 rides over or bumps against a rock, applying impact to the track 56, the spring 60 is compressed. As a result, the first wheel 54 retracts to buffer the impact applied to the track 56. At this time, the lower wheels 68 supported by the first end section 51 move along with the first wheel 54; therefore, the distance between the first wheel 54 and the lower rolling wheels 68 is kept constant at all times.

Hence, when the first wheel 54 juts out, the ground contacting length is increased accordingly to secure the stability of the crawler type vehicle 50. Further, if either track 56 rides over a rock with a resultant increase in the twist thereof, the track 56 does not easily come off the first wheel 54.

As a second prior art, there is a construction disclosed in Japanese Unexamined Utility Model Publication No. 63-148590.

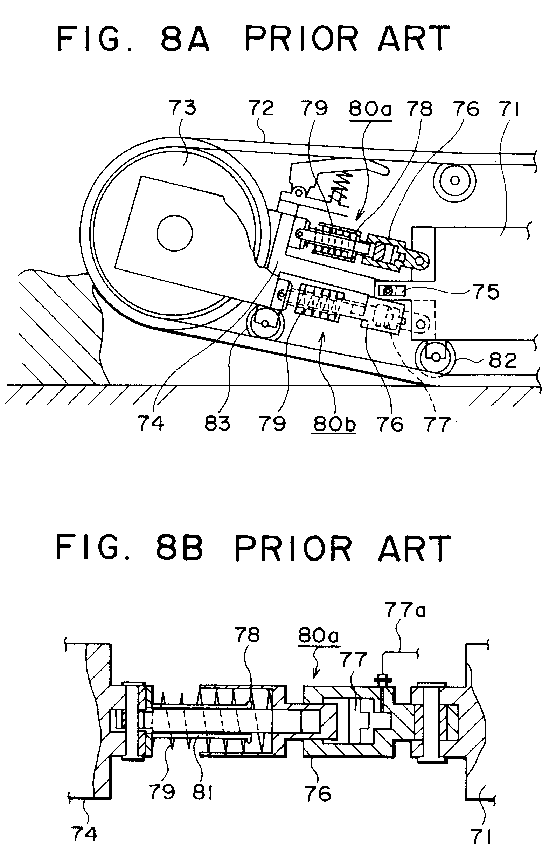

In the crawler type vehicle running device, a wheel yoke 74 of an idle wheel 73 supporting a crawler belt 72 with respect to a track frame 71 is connected using a bearing joint 75 which permits longitudinal motion and upward bend as shown in Fig. 8A and Fig. 8B. Further, the track frame 71 and the wheel yoke 74 are connected respectively by an upper tension mechanism 80a and a lower tension mechanism 80b which have adjustor cylinders 76, 77, 78, and springs 79.

A hydraulic mechanism, not shown, is connected to the adjustor cylinders 76, 77, and 78 via a pipe 77a; and the wheel yoke 74 is provided with a guide 81 for preventing the crawler belt from slacking which is inserted in the spring 79. The ground contacting side of the crawler belt 72 is guided by a lower rolling wheel 82 rotatably supported by the track frame 71 and a lower rolling wheel 83 rotatably supported by the wheel yoke 74.

In such a construction, when pressure oil is supplied to the adjustor cylinders 76, 77, and 78 via the pipe 77a from a hydraulic mechanism which is not shown, the wheel yoke 74 is pushed out via the spring 79 and the guide 81 so as to tension the crawler belt 72 through the idle wheel 73.

While the crawler type vehicle is traveling, if the crawler belt 72 rides over or bumps against a rock, applying impact to the crawler belt 72, the spring 79 is compressed, and the idle wheel 73 retracts, thereby buffering the impact applied to the crawler belt 72.

Furthermore, when the crawler belt 72 rides over a rock, the upper tension mechanism 80a compresses whereas the lower tension mechanism 80b stretches, causing the idle wheel 73 to bend upward with the bearing joint 75 connected to the track frame 71 working as the fulcrum. At this time, the lower rolling wheel 83 supported by the wheel yoke 74 moves along with the idle wheel 73; therefore, the distance between the idle wheel 73 and the lower rolling wheel 83 is kept constant at all times.

Hence, as in the case of the first prior art described above, the stability of the crawler type vehicle is secured and the crawler belt 72 is prevented from easily coming off the idle wheel 73.

In the foregoing first prior art, however, if either track 56 of a pair of right- and left-hand tracks 56, 56 rides over a rock while the crawler type vehicle 50 is advancing, the first end section 51 freely rocks laterally with respect to the frame structure 53, so that the first wheel 54 and the lower rolling wheels 68 supported thereby also rock laterally. Hence, there is a problem in that the track 56 is damaged if the first wheel 54 and the lower rolling wheels 68 fall down to the right or left, adding to the twist of the track 56.

In the foregoing second prior art, if either crawler belt 72 of a pair of right- and left-hand crawler belts 72, 72 rides over a rock while the crawler type vehicle is advancing, the idle wheel 73 is bent upward with the bearing joint 75 connected to the track frame 71 working as the fulcrum; therefore, the ground contacting length of the crawler belt 72 is significantly reduced, presenting a problem in that the vehicle body lacks in stability. There is another problem in that the falling moment of the idle wheel 73 is transmitted as a twisting torque of the wheel yoke 74 to the bearing joint 75, thus causing damage to the bearing joint 75.

### Disclosure of the Invention

The present invention has been made with a view toward solving the problems with the first and second prior arts, and it is an object of the invention to improve the stability of a vehicle body by preventing the ground contacting length of a crawler belt from being reduced even if the crawler belt in the vicinity of an idler rides over a rock, and to securely prevent the idler and a lower rolling wheel in the vicinity of the idler from falling down even if either right- or left-hand crawler belt in the vicinity of the idler rides over a rock, thereby preventing the crawler belt from being twisted severely and damaged.

According to the present invention, there is provided a crawler type vehicle running device constituted by: right- and left-hand track frames supporting a vehicle body; driving wheels, each rotatably supported on one end of each of the track frames; idler supports, each supported on the other end of each of the track frames; piston rods adapted to be biased by re-coiled springs so as to push out the idler supports, idlers rotatably supported by the idler supports; crawler belts passed around the idlers and the driving wheels; and lower rolling wheels for guiding the crawler belts; wherein
the track frames are each formed in an inverted U shape, the idler supports are provided such that they are longitudinally slidably supported between guide members fixed inside two leg portions of the inverted U shape track frames, and the idler supports have idlers rotatably supported thereon and first lower rolling wheels rotatably supported at positions adjacent to the idlers via brackets.

Further, in the widths inside the two leg portions of the track frames, the inner widths of the front frames equipped with the idler supports supporting the idlers and the first lower rolling wheels are made larger than the inner widths of other portions thereof by a predetermined interval.

Furthermore, the inner widths of intermediate frames rotatably supporting second lower rolling wheels are made identical to the inner widths of the brackets supporting the first lower rolling wheels.

In addition, the front ends of the front frames of track frames 3 and 4 are opened outside. Further, the brackets are fixed to the bottom surfaces of the idler supports.

According to such a configuration, the crawler belts passed around the foregoing driving wheels and idlers are allowed to maintain predetermined tension because the idlers supported by the foregoing slidable idler supports are pushed out by the re-coiled springs via the piston rods. The ground contacting portions of the crawler belts are guided by the first lower rolling wheels rotatably supported by the idler supports via the brackets and the second lower rolling wheels rotatably supported by the intermediate frames.

Under the condition, when the driving wheels are rotationally driven, the crawler belts are also rotationally driven, causing the vehicle to travel forward or backward. Even if the crawler belts ride over rocks while the vehicle is traveling, the first lower rolling wheels supported by the idler supports which are slidable in the longitudinal direction of the track frames move integrally with the idlers; therefore, ground contacting length L1 does not decrease and the distance between the first lower rolling wheels and the idlers is kept constant, thus permitting improved stability of the vehicle.

Further, even if either the right- or left-hand crawler belt rides over a large rock, it does not greatly incline since the idlers and the first lower rolling wheels are both supported by the idler supports which are slidably supported in the longitudinal direction of the track frames. Hence, no undue twisting force is applied to the crawler belts, leading to improved durability of the crawler belts.

Furthermore, in order to longitudinally install the idlers and the first lower rolling wheels in the vicinity thereof to the track frames, the widths of the track frames for installing them are made larger than those of other portions thereof by a predetermined interval. This leads to an increased section modulus of the installing portions, permitting a higher bending strength.

Moreover, in the widths inside the two leg portions of the track frames, the inner widths of the intermediate frames rotatably supporting second lower rolling wheels are made identical to the inner widths of the brackets supporting the first lower rolling wheels so as to establish commonality between the second lower rolling wheels and the first lower rolling wheels.

In addition, the idlers, the idler supports which support the first lower rolling wheels in the vicinity of the idlers, the components related to idler cushions, etc. can be assembled into one unit first, then the assembled unit can be inserted between the guide members from the front of the front frames, thus achieving improved assemblability. The brackets are fixed to the bottom surfaces of the idler supports to make the brackets compact.

### Brief Description of the Drawings

Fig. 1A is a side view of a hydraulic excavator to which the present invention has been applied, and Fig. 1B is a front view thereof;
Fig. 2 is an enlarged view of portion P of Fig. 1A or a sectional view taken along line A-A of Fig. 3;
Fig. 3 is a sectional view taken along line B-B of Fig. 2;
Fig. 4A is a sectional view taken along line C-C of Fig. 2, and Fig. 4B is a sectional view taken along line D-D of Fig. 2;
Fig. 5 is a sectional view taken along line E-E of Fig. 2;
Fig. 6A is a side view illustrating a running device in accordance with the present invention and the action of a rock, and Fig. 6B is a front view thereof;
Fig. 7A is a general side view of a first prior art, and Fig. 7B is an enlarged sectional view thereof; and
Fig. 8A is a side view of a running device according to a second prior art, and Fig. 8B is an enlarged sectional view thereof.

### Best Mode for Carrying Out the Invention

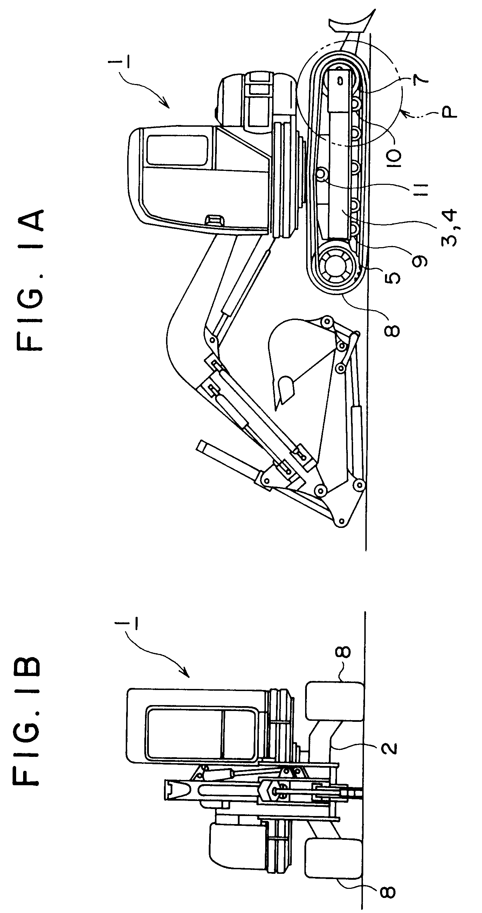

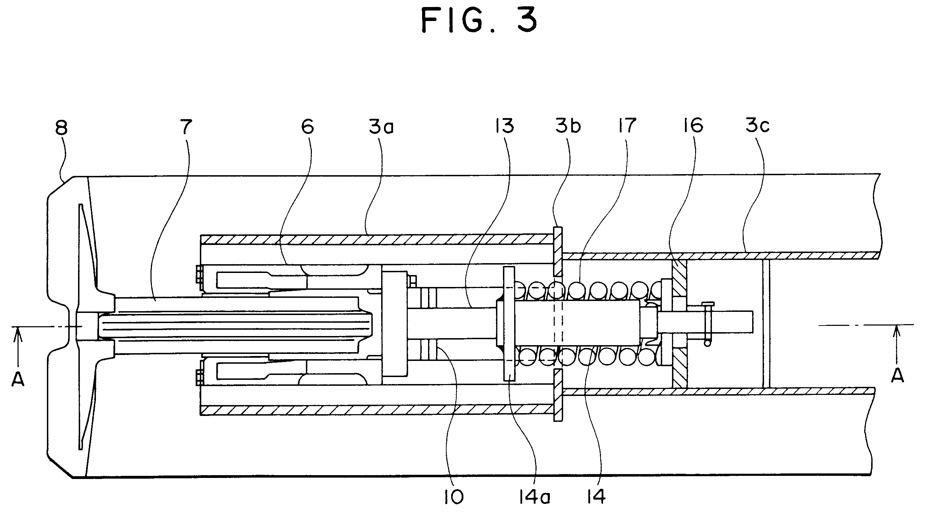

A preferred embodiment related to a crawler type vehicle running device according to the present invention will be described in detail in conjunction with Fig. 1A to Fig. 6B.

First, the construction of the embodiment will be described.

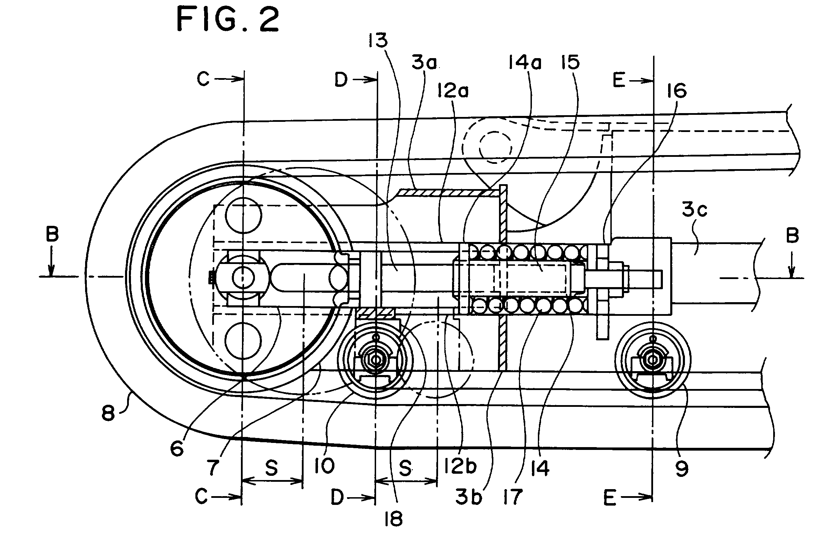

In Fig. 1A and Fig. 1B, a crawler type vehicle body 1 is supported by right- and left-hand track frames 3, 4 via a center frame 2. Driving wheels 5, 5 are rotatably supported by a hydraulic motor, which is not shown, on one longitudinal end of each of the track frames 3, 4, whereas idler supports 6, 6, the details of which are shown in Fig. 2 and after, are longitudinally slidably supported on the other longitudinal end of each of the track frames 3, 4.

Idlers 7, 7 are rotatably supported by the idler supports 6, 6, and crawler belts 8, 8 are passed around the driving wheels 5, 5 and the idlers 7, 7. The crawler belts 8, 8 are guided by second lower rolling wheels 9, 9 and upper rolling wheels 11, 11 rotatably supported by the track frames 3, 4, and first lower rolling wheels 10, 10 rotatably supported by the idler supports 6, 6.

The track frames 3, 4 share the same construction; therefore, the description will be given only to the track frame 3.

In Fig. 2 to Fig. 5, the track frame 3 is constituted by a front frame 3a, a connecting plate 3b, an intermediate frame 3c, and a rear frame which is not shown.

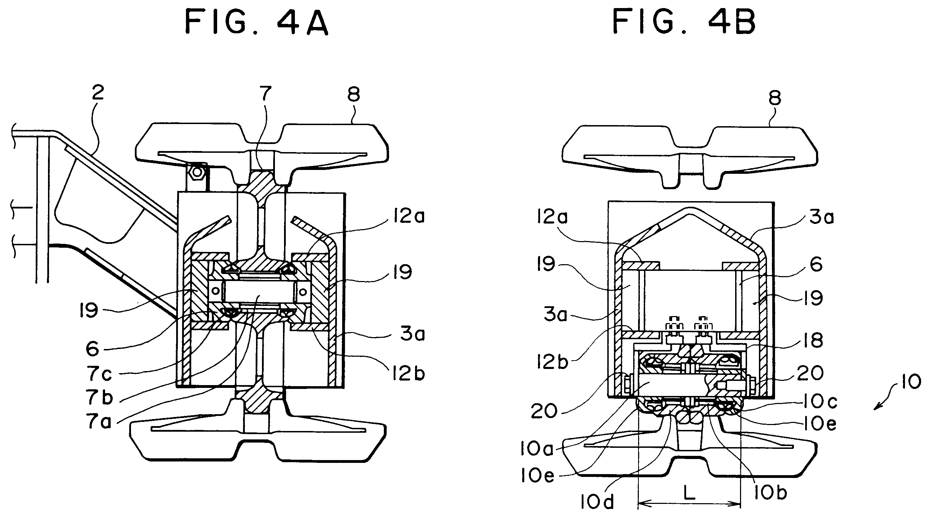

The front frame 3a is formed in an inverted U shape; guide members 12a, 12b are fixed inside the two leg portions thereof in the longitudinal direction of the front frame 3a, with a predetermined vertical interval provided therebetween as shown in Fig. 4A and Fig. 4B. An idler support 6 is longitudinally slidably supported between the guide members 12a, 12b.

Fixed at the rear surface of the idler support 6 is a piston rod 13. The rear of the piston rod 13 is fitted to a cylinder 14 as shown in Fig. 2; a cylinder chamber 15 formed by the foregoing piston rod 13 and the cylinder 14 is filled with grease by a grease supplying device which is not shown. A re-coiled spring 17 is mounted between a flange 14a of the cylinder 14 and a flange 16 fixed to the intermediate frame 3c.

As shown in Fig. 4A, the idler 7 is rotatably supported via a bearing 7b by a shaft 7a supported by the idler support 6; the space between the idler support 6 and the idler 7 is sealed by seal rings 7c, 7c. Spacers 19, 19 are provided between the lateral outer side of the idler support 6 and the inner side of the front frame 3a to guide the idler support 6 so that it is free from lateral play.

Between the guide members 12a, 12b fixed inside the two leg portions of the front frame 3a formed in the inverted U shape, a bracket 18 shaped like an inverted U is fixed at the bottom of the idler support 6 by a plurality of bolts indicated by dashed lines as shown in Fig. 4B. These members may alternatively be welded into one piece.

A first lower rolling wheel 10 composed of a support shaft 10a, a bearing 10b, a seal 10c, a rolling wheel 10d, and a side ring 10e is rotatably installed in inner width L of the inverted U shape bracket 18 by fixing the support shaft 10a by bolts 20, 20 on both sides. The inner width of the front frame 3a is set larger such that a predetermined interval is provided with respect to the bolts 20, 20 located on both sides to avoid sliding contact therewith.

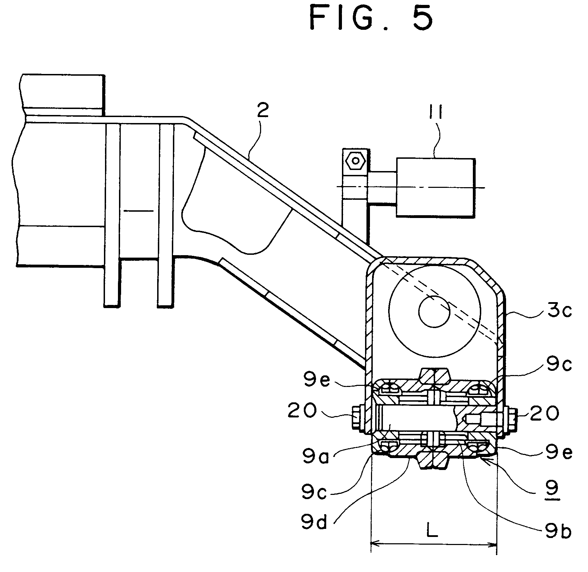

A second lower rolling wheel 9 composed of a support shaft 9a, a bearing 9b, a seal 9c, a rolling wheel 9d, and a side ring 9e is rotatably installed in inner width L of the intermediate frame 3c by fixing the support shaft 9a by the bolts 20, 20 on both sides as illustrated in Fig. 5. Inner width L of the intermediate frame 3c is made identical to inner width L of the inverted U shape bracket 18 to allow commonality between the second lower rolling wheel 9 and the first lower rolling wheel 10.

The operation of such a construction will now be described.

The cylinder 14 is pushed out from the track frame 3 toward the idler 7 when a predetermined spring force of the re-coiled spring 17 is applied to the flange 14a of the cylinder 14. This causes the piston rod 13 to be pushed out via the grease charged in the cylinder chamber 15 and causes the idler 7 supported by the idler support 6 to be pushed out in turn, thus imparting tension to the crawler belt 8. The tension of the crawler belt 8 is adjusted by adjusting the grease charged into the cylinder chamber 15 from a grease supplying device not shown.

With predetermined tension applied to the crawler belt 8, when the driving wheel 5 is rotationally driven by a hydraulic motor which is not shown, the crawler belt 8 is rotationally driven, and the vehicle travels forward or backward. The ground contacting portion of the crawler belt 8 is guided by the second lower rolling wheel 9 rotatably supported by the track frame 3 and the first lower rolling wheel 10 rotatably supported by the bracket 18 fixed to the idler support 6 in the track frame 3.

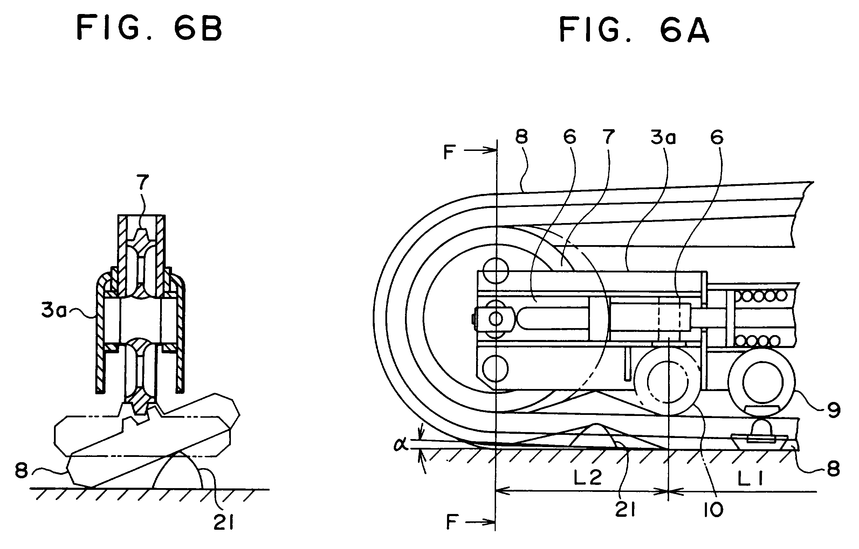

Even if the crawler belt 8 rides over a rock while the vehicle is traveling, the idler 7 supported by the idler support 6 will not be moved upward since the idler support 6 is longitudinally slidably supported by the guide members 12a, 12b as illustrated in Fig. 4A. Hence, ground contacting length L1 shown in Fig. 6A does not decrease.

Further, even if either of the right- and left-hand crawler belts 8, 8 rides over a rock 21 as shown in Fig. 6A and Fig. 6B, the first lower rolling wheel 10, which is fixed in the vicinity of the idler 7 with respect to the idler support 6, moves forward or backward integrally with the idler 7, and therefore, distance L2 between the first lower rolling wheel 10 and the idler 7 is always kept constant.

Accordingly, if the crawler belt 8 bumps against a large rock or the like and the idler 7 moves to the position indicated by the chain line in Fig. 2 by distance S in relation to the front frame 3a, then the first lower rolling wheel 10 also moves to the position indicated by the chain line by distance S accordingly; if the idler 7 juts out in relation to the front frame 3a, then the first lower rolling wheel 10 also juts out, so that ground contacting length L1 increases. This enables the stability of the vehicle body to be improved. Moreover, since distance L2 between the first lower rolling wheel 10 and the idler 7 is kept constant and distance L2 can be decreased as compared with the construction including only the second lower rolling wheel 9 supported by the track frame 3; therefore, the crawler belt 8 is prevented from easily coming off the idler 7.

Furthermore, since the idler 7 and the first lower rolling wheel 10 are both supported by the idler support 6 which is slidably supported in the longitudinal direction of the track frame 3, the idler 7 and the first lower rolling wheel 10 do not incline greatly. Hence, the crawler belt 8 is not subjected to undue twisting force, thus preventing the crawler belt from being damaged.

In order to install the idler 7 and the first lower rolling wheel 10 in the vicinity thereof to the track frame 3, the portions of the track frame 3 for installing the foregoing components are made wider in the longitudinal direction than other portions thereof by a predetermined interval so as to obviate sliding contact between the fixtures of the bracket 18 of the first lower rolling wheel 10 and the track frame 3. Therefore, the section modulus of the installing portions increases, leading to a higher bending strength. The bracket 18 is fixed to the bottom surface of the idler support 6, allowing the bracket 18 to be fixed to the idler support 6 in a compact manner.

In addition, since the front end of the track frame 3 is open, the idler support 6 including the idler 7, the bracket 18, the first lower rolling wheel 10, and the components related to an idler cushion can be assembled into one unit, then the assembled unit can be inserted between the guide members 12a, 12b from the front.

The description has been given to the track frame 3; the description of the track frame 4 will be omitted because the construction and operation thereof are exactly the same as those of the track frame 3.

In the embodiment, the first lower rolling wheel 10 has been supported by the idler support 6 through the inverted U shape bracket 18; however, other appropriate structure such as a cantilever bracket may be used instead. Further, the full longitudinal lengths of the track frames 3, 4 may be set to the width of the front frame 3a to which the idler 7 and the first lower rolling wheel 10 are installed, and an appropriate spacer may be used for the intermediate frame 3c or the like to which the second lower rolling wheel 9 is installed.

The following summarizes the operations and advantages of the present invention:
(1) The idler support 6 which is longitudinally slidably supported inside the two leg portions of the inverted U shape track frame 3 securely prevents the idler 7 from falling down or moving up and down, thus making it possible to prevent damage to the crawler belt 8 caused by the crawler belt 8 twisting or coming off the idler 7 or the first lower rolling wheel 10 and also to secure ground contacting length L1 of the crawler belt 8 so as to achieve improved stability of the vehicle body.
(2) In order to install the idler 7 and the first lower rolling wheel 10 in the vicinity thereof, the portion of the track frame 3 for installing the foregoing components is made wider in the longitudinal direction thereof than other portions by a predetermined interval. This adds to the section modulus of the installing portions, permitting a higher bending strength.
(3) In the width inside the two leg portions of the track frame 3, the inner width of the intermediate frame 3c rotatably supporting the second lower rolling wheel 9 is made identical to the inner width of the bracket 18 supporting the first rolling wheel 10 so as to allow commonality between the second lower rolling wheel 9 and the first lower rolling wheel 10.
(4) The idler 7, the idler support 6 supporting the first lower rolling wheel 10 located in the vicinity of the idler 7, the components related to the idler cushion, etc. can be assembled into one unit first, then the assembled unit can be inserted between the guide members 12a, 12b from the front, thus enabling improved assemblability.
(5) The bracket 18 can be made compact by securing the bracket 18 to the bottom surface of the idler support 6.

### Industrial Applicability

The present invention is useful as a crawler type vehicle running device which is capable of preventing the ground contacting length of a crawler belt even if the crawler belt in the vicinity of an idler rides over a rock, thus improving the stability of a vehicle, and also capable of securely preventing the idler and a lower rolling wheel in the vicinity thereof from falling down, whereby the crawler belt is prevented from being severely twisted and damaged even if either of right- and left-hand crawler belts in the vicinity of the idler rides over a rock.

## Claims

1. A crawler type vehicle running device comprising: right- and left-hand track frames supporting a vehicle body; driving wheels, each rotatably supported on one end of each of said track frames; idler supports, each supported on the other end of each of said track frames; piston rods adapted to be biased by re-coiled springs so as to push out said idler supports, idlers rotatably supported by said idler supports; crawler belts passed around said idlers and said driving wheels; and lower rolling wheels for guiding said crawler belts; wherein
said track frames 3, 4 are each formed in an inverted U shape, idler supports 6, 6 are provided such that they are longitudinally slidably supported between guide members 12a, 12b fixed inside two leg portions of said inverted U shape track frames, and said idler supports 6, 6 have idlers 7, 7 rotatably supported thereon and first lower rolling wheels 10, 10 rotatably supported at positions adjacent to the idlers 7, 7 via brackets 18, 18.

2. A crawler type vehicle running device according to Claim 1, wherein, in the width inside the two leg portions of said track frames 3, 4, the inner widths of front frames 3a, 3a equipped with said idler supports 6, 6 supporting said idlers 7, 7 and said first lower rolling wheels 10, 10 are made larger than the inner widths of other portions by a predetermined interval.

3. A crawler type vehicle running device according to Claim 1, wherein, in the width inside the two leg portions of said track frames 3, 4, the inner widths of intermediate frames 3c, 3c rotatably supporting second lower rolling wheels 9, 9 are made identical to the inner widths of the brackets 18, 18 supporting said first lower rolling wheels 10, 10.

4. A crawler type vehicle running device according to Claim 2, wherein the front ends of the front frames 3a, 3a of said track frames 3, 4 are opened outside.

5. A crawler type vehicle running device according to Claim 3, wherein said brackets 18, 18 are fixed to the bottom surfaces of said idler supports 6, 6.
